# EUROPEAN PATENT SPECIFICATION

(11) **EP 3 866 595 B1**
(45) Date of publication and mention of the grant of the patent: **12.03.2025**
(21) Application number: 19874466.6
(22) Date of filing: 03.10.2019
(51) Int. Cl.: A01N 25/12, A01N 59/06, A01N 59/16, A01N 59/20, C01F 5/08, C01F 11/06, C01F 5/06

(54) **POWDER FORMULATIONS FOR CONTROLLED RELEASE OF REACTIVE OXYGEN SPECIES**
PULVERFORMULIERUNGEN ZUR KONTROLLIERTEN FREISETZUNG REAKTIVER SAUERSTOFFSPEZIES
FORMULATIONS DE POUDRE POUR LA LIBÉRATION CONTRÔLÉE D'ESPÈCES RÉACTIVES DE L'OXYGÈNE

(30) Priority: 18.10.2018 AU 2018903942
(43) Date of publication of application: 25.08.2021
(73) Proprietor: Calix Limited, Pymble, NSW 2073 (AU)
(72) Inventor: SCEATS, Mark, Pymble, New South Wales 2073 (AU); HODGSON, Phil, Pymble, New South Wales 2073 (AU); VINCENT, Adam, Pymble, New South Wales 2073 (AU); VAN MERKESTEIN, Robert, Pymble, New South Wales 2073 (AU)
(74) Representative: Tagliafico, Giulia
(86) International application number: PCT/AU2019/051073
(87) International publication number: WO 2020/077391

(56) References cited:
- WO-A1-2017/219068
- WO-A1-2018/076073
- CN-A- 104 888 217
- US-B2- 9 913 475

## Description

### TECHNICAL FIELD

The present invention relates broadly to the formulation and/or a composition of an oxide powder material that inhibits the growth of many microorganisms by the controlled release of Reactive Oxygen Species (ROS), generated in a burst mode or ROS burst when powder particles come in contact with such microorganisms. The powders can be applied in a wide variety of applications, such as a constituent in marine paints for inhibiting the growth of biofilm; as a coating for sewers to inhibit corrosion, as a spray or powder for agriculture and aquaculture to inhibit disease; and as a powder, ointment, paste or a spray for animals and humans, to inhibit disease. The present invention may also include a process for generation of said oxide powder.

### BACKGROUND

Reactive Oxygen Species (ROS), such as the hydrogen peroxide, superoxide and peroxyl radicals are generated by eukaryotic cells in plants, fish, animals and humans as a means of inhibiting diseases from pathogenic microorganisms such as colonies of viruses, bacteria, and fungi. In particular, anaerobic microorganisms cannot readily cope with the oxidative stress caused by small doses of ROS. It is also well understood that ROS also attacks the eukaryotic cells, albeit more slowly, also because the internal oxidative stress created by the ROS ultimately breaks down the cells' internal structures.

Hence a typical response of eukaryotic cell to disease is to generate a burst of ROS to ward off disease, because a sustained response is not possible. Such a process, called the ROS burst, requires a signalling pathway whereby the cell recognises when it is under attack by such pathogens, so that it can respond with such a ROS burst.

In recent years, oxide nanoparticles have been shown to be effective in the inhibition of such pathogens, and most commonly, such efficacy is generally attributed to ROS detected on or around these particles. It is well understood from previous published work on catalysts that oxide surfaces can support radical species, such as peroxides, on the steps and edges of the oxide crystals, so that nanoparticles, with their very high surface area to volume ratio, can be a source of ROS in an aqueous environment.

Since nanoparticles are much smaller that the microorganism, the oxide nanoparticles bind to the surface of many such microorganisms. It is generally proposed the ROS released from nanoparticles can diffuse through the surface of the microorganism, generally leading to the death of the microorganism. Such nanoparticles are generally termed bioactive. In certain cases, the nanoparticles have also been seen to disrupt this cell membrane, and diffuse through the cell walls to directly attack the intracellular systems of the microorganism.

In such applications, the general proposition is that the ROS from such nanoparticles generates oxidative stress in the pathogenic microorganism in the same way as eukaryotic cells produce ROS bursts under attack from such pathogens, and therefore such bioactivity can help mitigate disease. This is a generic mode of action, which is significantly different from pharmaceuticals which target specific chemical sites in the microorganism. In response to such pharmaceuticals, the pathogenic microorganism generates resistance. By contrast, there is no evidence teaching that such resistance to ROS can be developed. Of course, there is a continuous evolution of the combat between eukaryotic cells and pathogens, and ROS generation and suppression is a central theme.

The general proposition of oxidative stress is not uniformly accepted, and an alternative is that the observations of inhibition derive from attachment of the oxide nanoparticles to biofilms and their destruction through catalytic reactions. In the context of this invention, such catalysis is generally associated with radical species on the particle surfaces, and the net outcome of the inhibition is consequently similar to that described herein.

Typical oxide nano-particles that are bioactive are AgO, ZnO, MgO, CuO, SiO₂, TiO₂, Al₂O₃, Fe₂O₃, and Mn₃O₄. The metal cations can also play a significant role, and some, such as Cu²⁺ are toxic in their own right, and others provide micronutrients such a Mg²⁺ and Zn²⁺. The Mg²⁺ is a common plant fertilizer.

Without being limited by theory, it is generally understood that ROS species pre-exist on the surface of such nanoparticles, and the surface of such nanoparticles are generally hydrated. The release of such stored ROS occurs by diffusion from the particle surface. However, the coverage of ROS on the nano-particle surface is not well characterised, and the processes by which the ROS are created is also not well characterised. However, general principles may be applied in which the ROS are created from radical species formed when chemical bonds are ruptured during synthesis, and the stored ROS are the residual, long-lived species that have survived radical-radical recombination.

The synthesis of oxide nano-particles is very expensive, and there are concerns for human health arising from the ability of nano-particles to readily penetrate through the skin, and are easily inhaled. To overcome these problems, one approach that has been developed is to produce porous micron sized particles that have large internal surfaces, which are equivalent, on a mass basis, in terms of m²/gm of material to that of nanoparticles. A means of manufacture of such materials is disclosed by Sceats et. al. (WO2018076073) and references therein, in which a precursor material, having a large mass fraction of volatile materials, is flash calcined to remove the volatiles and flash quenched so that the sintering of the particles, which decreases the surface area, is minimised.

The bioactivity of such powders has been claimed by Sceats (Published PCT Application No. WO2017219068) , and Sceats and Hodgson (Published PCT Application No. WO2016112425) and references therein, particularly in reference to magnesium hydroxide slurry produced from nano-active MgO. In that case, the nano-active MgO particles are fully hydrated by the flash hydration process described by Sceats and Vincent (Published PCT Application No. WO2015058236). In general terms, it has been observed that the bioactivity of small nanoparticles and large nano-active particles is similar, and correlates with the surface area of the initial materials (in m²/gm). Thus burned or dead-burned powders, show little bioactivity.

CN 104888217 reports a nanoparticle containing a photosensitizer, said nanoparticle comprising: a photosensitizer, said photosensitizer being covalently bonded to a nanoparticle matrix material by at least a portion of said nanoparticle and incorporated into said nanoparticle matrix in a quasi-aggregated state. D1 further mentions a method of preparing nanoparticles and a method of killing cancer cells by photodynamic therapy using said nanoparticles.

US 9913475 mentions a process and apparatus for the manufacture of oxide products for use as biocide, chemical detoxifying, and catalytic support products, from caustic calcined carbonate powder, preferably from magnesite, dolomite, or hydromagnesite. These oxide particles are characterized by high surface area, high porosity and a high degree of calcination, and the method of manufacture utilizes an indirectly heated counterflow reactor. The oxides may be used as a powder, granules, or formulated into a slurry and used as a spray, emulsion, foam or fog, or the powder product may be directly applied. Also described is the formation of particles with microstructures defined by at least one nano-crystalline structure positioned on the outer surface of the particles.

The ROS species in nano-active powder particles are produced from precursor particles formed in a calcination step, and the ROS is formed and stored during the hydration step. This stored ROS is released into the aqueous medium by diffusion. The bioactivity of such nano-active materials is therefore similar to that of the equivalent nanoparticles, except that the ROS species stored mainly on the internal pore surfaces. Thus, the stored ROS is released into an aqueous solution by diffusion from the internal pores.

Noting that the stored ROS represents the residual ROS species after radical-radical recombination, it would be most desirable to produce the ROS only when the particle is in contract with a pathogenic microorganism, thereby emulating a ROS burst from a eukaryotic cell in such contact. As a general principle, radical-radical recombination during formation competes against diffusion to the microorganism, and the higher escape efficiency from such a ROS burst may provide a larger dose of ROS into the microorganism, thereby increasing the efficacy. The object of this invention is to describe the means of generating a burst of ROS from a nano-active particle as a result of the interaction with such pathogenic microorganisms.

Any discussion of the prior art throughout the specification should in no way be considered as an admission that such prior art is widely known or forms part of common general knowledge in the field.

### SUMMARY

### PROBLEMS TO BE SOLVED

It may be an advantage of the present invention to provide or produce a nano-active powder of micron size particles that releases a burst of ROS when the particles come into contact with a microorganism.

Further advantages of the present invention may allow the said powder to be deployed in antifouling marine coatings or paints where the microorganisms may be the anaerobic bacteria that surround cyprid barnacle larvae as they transition to the sessile stage to first bind to a surface. The premature inhibition of such bacterial colonies on a coated surface may inhibit the attachment of such larvae to such a coated surface.

A further advantage of the present invention may allow the said powder to be deployed in coatings of sewage systems where the microorganisms may be the Sulphur Oxidising Bacteria (SOB) that reside on the crown of sewer lines, and above the water level. The sulphuric acid attacks the alkaline concrete and steel, and cause corrosion. The inhibition of SOB colonies growing on a coated surface may inhibit the corrosion of the sewage system.

Further, an advantage may also be deployed as coatings and sprays on air-exposed surfaces to inhibit the growth of infectious microorganisms, with specific reference to outbreaks of diseases which have become resistant to conventional antibiotics, and in particular to superbugs, such as Carbapenem resistant Enterobacteriaceae (CRE), Methicillin-resistant Staphylococcus aureus (MRSA), ESBL-producing Enterobacteriaceae (extended-spectrumβ-lactamases), Vancomycinresistant Enterococcus (VRE) Multidrug-resistant Pseudomonas aeruginosa and Multidrug-resistant Acinetobacter.

Further advantages may include the ability or capacity to be deployed in agriculture and aquaculture where the growing resistance of diseases to pesticides, fungicides, bactericides and viricides has led outbreaks of disease that are otherwise increasingly difficult to manage.

Further advantages may also include the ability to be deployed in topical ointments and powders that are used to protect humans and animals against the spread of pathogens in wounds and infections from various viruses, bacteria and fungi or limit the spread or infection thereof.

Such an advantage may also be deployed during surgery, or surgical recovery, where the inhibition of colonies of infection must be suppressed.

Such an advantage may also be deployed using nano-active particles as a medical treatment for lung diseases such as pneumonia, cystic fibrosis, and tuberculosis in the lungs, where the powder particles can reside on infected lung tissue and can mitigate infection, whereas soluble toxic antibiotic compounds are readily absorbed in the blood stream, requiring high doses, with adverse patient impacts.

In applications to marine coatings, non-toxic nano-active particles may be applied in combination with the best available toxic materials, where the benefits are to enhance the lifetime of the coating, and to reduce the release of such materials to the marine environment.

In applications, for the prevention of disease in agriculture, aquaculture, and medicine, nano-active particle treatment can be a part of a disease management program in which the nano-active particles may be applied to suppress growth of pathogenic bacteria, and if the disease pressure nevertheless grows to the point of disease outbreak, antibiotics may then be applied. The benefit is the reduction of the use of antibiotics, and the delay in the build-up of resistance.

A further advantage may include a feature that the materials may be used that provide a higher efficacy of control by the generation of a ROS burst on contact with biofilms, and specifically at a higher dose rate that an equivalent nano-active particle with stored ROS.

The present invention described herein may address or ameliorate at least one of the aforementioned applications or advantages.

### MEANS FOR SOLVING THE PROBLEM

A common characteristic of most pathogenic microorganisms is their ability to form biofilms. In the battle between eukaryotic cells and pathogens, the biofilm matrix becomes acidic, driven by the metabolism of the pathogen to produce energy, for example by the breakdown of sugars. Most generally, the release of such an acidic biofilm by a pathogen is related to growth of a pathogenic colony.

Preferably, the acidity of such a biofilm from a growing colony of pathogens is used to trigger the release of a burst of ROS from a nano-active particle, which then suppresses the growth of the microorganism colony, and thus inhibits the outbreak of disease. This is a mode of inhibition, so that the material is minimally consumed when the biofilm is inactive.

In a first aspect the present invention is directed towards a metal or semi-metal oxide powder inhibiting the growth of colonies of microorganisms, wherein:
- the powder includes particles having a particle size distribution between 0.1 to 100 microns, which are formulated as a strongly bonded, porous, composite of nano-scale grains of materials, wherein the grains have a surface area of 75 to 300 m2/g and which have less than about 10⁻⁴ % of free radical species by weight;
- the powder includes less than 1% of the maximum amount of radical species by weight; and
- the powder is generated by hydration of an unprocessed metal or semi-metal oxide powder in 0.01M citric acid.

Preferably, the particle size distribution is between 1 to 20 microns. The microorganisms may provide a biofilm and the acidity of the biofilm triggers the release of the ROS burst which then suppresses the growth of the micro-organisms.

The preferred powder may be adapted to be used in one of the following environments: a marine environment, a sewer crown environment, a plant, an animal or a human.

Preferably, the microorganisms are selected from one of the following group: viruses, bacteria, fungi or larvae of insects.

Preferably, the metal oxide is selected from one of the following oxides: AgO, ZnO, MgO, CuO, SiO₂, TiO₂, Al₂O₃, Fe₂O₃, and Mn₃O₄; and wherein the respective positive ion is selected to provide nutrients to the selected environment.

The preferred powder may include MgO and the powder enhances the inhibition of microorganism growth by suppressing of hydrogen sulphide, ammonia and phosphorous generated by the microorganisms.

Preferably, the powder is generated by annealing the unprocessed metal or semi-metal oxide at a calcination temperature within the range of 400 to 800°C.

Preferably, the powder includes the following characteristics:
a. A porosity of the particles is in the range of 0.3 to 0.5;
b. A specific surface area is in the range of 75 to 300 m²/g;
c. A mean grain size of the powder is in the range of 5-20 nm; and
d. A strength characterised by a high resistance to grinding attributed to the binding of grains in the composite by necks that are less than about 1nm in size, and a Youngs modulus of 5% of that of the equivalent bulk material.

The preferred powder may be produced by calcination at a temperature within the range of 400 to 800°C and then quenched.

The preferred powder may be adapted for use in a marine coating which inhibits microorganism growth on the coating.

Preferably, the powder may be a component of a coating applied to sewer crowns which inhibits the growth of Sulphur Oxidising Bacteria. The reactive oxygen species may be selected from the group comprising: hydrogen peroxide, superoxide, or peroxy radicals.

In a preferred embodiment, the calcined particles have an approximate average diameter of between 1 to 10 microns. The powder is preferably produced by calcination at a temperature within the range of 400 to 800°C for a time period of less than 30 seconds and then quenched after calcination.

In the context of the present invention, the words "comprise", "comprising" and the like are to be construed in their inclusive, as opposed to their exclusive, sense, that is in the sense of "including, but not limited to".

The invention is to be interpreted with reference to the at least one of the technical problems described or affiliated with the background art. The present aims to solve or ameliorate at least one of the technical problems and this may result in one or more advantageous effects as defined by this specification and described in detail with reference to the preferred embodiments of the present invention.

### BRIEF DESCRIPTION OF THE FIGURES

Embodiments of the invention will be better understood and readily apparent to one of ordinary skill in the art from the following written description, by way of example only, and in conjunction with the drawings, in which:

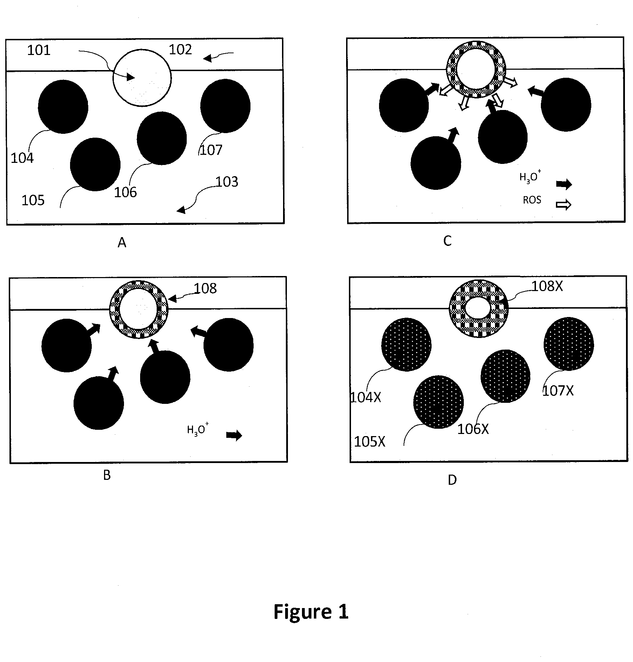

Figure 1 illustrates a schematic of an embodiment that illustrates a nano-active particle interacting with the biofilm exuded by a microcolony of pathogenic microorganisms. In Figure 1A the illustration shows the initial contact of the particle with the biofilm and its active bacteria, and Figure 1B shows the decomposition of the particle through the reaction of the acidic water in the biofilm, and the release of ROS into the film and its diffusion into the active cells of the biofilm, and Figure 1C shows the partially decomposed particle in the presence of the deactivated cells.

### DESCRIPTION OF THE INVENTION

Preferred embodiments of the invention will now be described by reference to the accompanying drawings and non-limiting examples. It is emphasised that the mechanism described by the embodiment of Figure 1 for the case of bacteria biofilms is similar to embodiments for colonies of virus, anaerobic fungi and the larvae of insect pests.

In a first preferred embodiment of the present invention, an example used to describe the invention is the interaction of a nano-active particle 101 with a biofilm. Biofilms have a characteristic structure consisting of bacterial microcolonies enclosed in a hydrated matrix of microbially produced proteins, nucleic acids, and polysaccharides. The bacterial cells in a biofilm are significantly more resistant to environmental stresses or microbially deleterious substances, such as antibiotics, and biocides, than planktonic cells. The development of a biofilm involves the reversible attachment of bacterial cells to a surface, followed by the irreversible attachment mediated by the formation of exopolymeric material, then formation of microcolonies and the beginning of biofilm maturation. During maturation, a 3-dimensional structure containing cells packed in clusters with channels between the clusters that allow transport of water and nutrients and waste removal, and lastly, cells detach and disperse to initiate new biofilm formation. Figure 1 describes the case in which the nano-active particle 101, preferably produced by flash calcination and quenching described below, interacts with the growing exopolymer matrix 102 exuded from the bacterial cells 103-106.

The nano-active particle may be a metal oxide material, such as MgO, and is generally and preferably 1-10 microns in size and is similar in size to the bacterial cells. The material is preferably made using the flash calcination and flash quenching process described by Sceats et. al. in which a precursor material, comprising volatile constituents of about 30-60% by weight, is flash heated in a reactor to a temperature in which the decomposition occurs as quickly, and at as low a temperature, as possible to produce the porous metal oxide, and then rapidly quenched to prevent sintering. In this embodiment, the reaction conditions are optimised such that the grains of the metal oxide are comprised of crystals that are highly strained. Such a strain can be observed by the displacement of characteristic X-ray diffraction peaks from those of an annealed material of the same chemical composition. The diffraction lines are broadened by the small number of crystal cells in the grains, and also by the strain gradients in the grain cells. The stress energy is stored in the particle and is later used to create the ROS species. An important consequence is that the energy from the lattice strain in the particle is not released during the production process by the formation of oxygen vacancies, but rather, the energy is stored in the particles are released to form ROS species when the particle is attacked by the acid species from an active biofilm.

The condition for this process is the minimisation of the temperature of the calcination process and the minimisation of the residence time at that temperature, so that the displacement of an oxygen atom within the grain is not activated during the production process. The achievement of that criterion is the measurement of paramagnetic species using electron paramagnetic resonance (EPR) spectroscopy, because the ejection of an oxygen atom to form an oxygen vacancy from within the grain generally leaves behind an electron at the vacancy site, as a paramagnetic F-centre, and the ejected oxygen ion O⁻ is bound to the surface of the grain as a paramagnetic V-centre. The criterion is achieved if the characteristic EPR signal of these species is not observed. For the avoidance of doubt, the product may be heated and the characteristic EPR spectrum is observed during the subsequent sintering of the particle. That sintering is also characterised by reduction of the surface area of the grains, as measured by the specific surface area of the material (in m²/g), and a narrowing of the X-Ray diffraction lines as the strain is relieved and the grains grow. In summary, the flash calcination/flash quenching process technology is operated to minimise the release of stress and the minimum production of paramagnetic species in the nano-active material particles. Such operating conditions are generally different for different precursors materials because the energetics for decomposition of the precursor and activation of the generation of oxygen vacancies are different. The temperature for calcination is preferably 50°C, or most preferably 10°C above the equilibrium temperature of the decomposition reaction of the precursor at pressures of the volatile gas, that are as low as practically possible for an industrial process.

The biofilm 102 is generally acidic in nature, where the low pH arises from the conversion of sugars by the bacteria into energy to form the biofilm. This pH may be in the range of 4.5-6.5 in an active biofilm, compared to about 7.0 for a quiescent biofilm. The metal oxide has a pK_{b} that depends on the chemical composition. For example, that of MgO is about 10.4. It has a low solubility in neutral water, and a slow dissolution rate at ambient temperature. However, the rate of reaction accelerates when the pH is acidic, and as a consequence, MgO powder neutralises the acid initially by the formation of Mg(OH)₂. The invention described herein is associated with the observation that the attack of the powder by the acid causes the formation of the radical F and V centre species, as observed by the growth of the EPR spectrum characteristic of such species as the particle reacts. Without being bound by theory, it is apparent that the reaction with H+ induces a stress relaxation of the grains of the metal oxide as the crystal structure changes from the oxide form to the hydroxide form. This is not unexpected because the crystal structures of the oxide is generally different from that of the hydroxide so that transport of oxygen is required to enable the phase change. The high strain of the oxide crystal promotes the rate of the lattice reconstruction.

It is well established that the reaction of F and V centres with water leads to the production of ROS. Indeed, the EPR technique can be used to quantify the concentration of ROS species in the particle, by use of spin traps such as DPPO in H₂O₂ which forms stable radical species with a characteristic EPR spectrum when ROS is present. Most significantly, the concentration of ROS observed in the reaction of an oxide powder is higher than that observed in the same material which has been completely hydrated, for example by fast hydration at a higher temperature. Without being limited by theory, the hydroxide material is a carrier of ROS which is stored in the hydroxide powder, whereas the oxide material generates ROS when it is hydrated in situ under attack by the acid from the biofilm, and in this case, the release of ROS is quantitatively higher than the stored ROS because the radical recombination which generally occurs to lower the ROS competes with the outward diffusion of the ROS to attack the structures in the bacterial cells, which turns off the generation of acid. In effect, the acid from the active bacterial cells making biofilm triggers the release of ROS which turns off the generation of biofilm. This is termed an ROS burst because it mimics the ROS burst response of a eukaryotic cell to the presence of biofilm exuded by pathogens. The concentration of ROS in the particle measured by EPR spin trap measurements is preferably the order of micromolar, which is the same order of magnitude as found in the burst of ROS from eukaryotic cells. This is an important factor because higher concentrations of ROS would attack the structures in such cells. This can be controlled by the process conditions and the application rate to reduce infection so that the ROS burst has sufficient intensity to turn off the bacterial cells, but insufficient intensity to damage the eukaryotic cells of animals and plants. Under those conditions, the material is non-toxic to animals and plants, while inhibiting disease.

It is noted that H₂O₂ is a volatile constituent of ROS, and the presence of H₂O₂ in the air near a biofilm or a partly hydrated surface of a nano-active particle may inhibit insect pests from attack. Further, any suppression of H₂S or NH₃ from a biofilm inhibited by the nano-active material may also be signalling factor for inhibition of pests.

Thus, turning to Figure 1 as an example embodiment. This a schematic of the evolution of a system in which a nano-active, highly strained, particle 101, typically 1-20 microns dimeter in an aqueous medium 102 becomes initially engaged (A) with a biofilm 103 around bacteria 104-107. The bacteria are active, for example creating additional biofilm, and exude acid, represented as H₃O⁺ into the biofilm from such synthesis processes as shown in (B) and there is a flux of acid that moves towards the alkali particle which hydrates and neutralises the acid, as show schematically by a thin layer 108 which eats into the particle. The transformation of the particle from an aggregate of metal oxide crystalline grains to an aggregate of hydrated crystalline or amorphous grains required atomic rearrangement and in this case, the oxygen atoms are ejected from the oxide to form radical species, such as the F and V centres previously described. These radical species react with water in the layer 108 to generate ROS species such as the hydroxyl radical, ·OH, hydrogen peroxide H₂O₂, and superoxide ions ·O₂⁻ and these diffuse into the aqueous layer and the biofilm, and a flux of ROS moves towards and into the bacteria where they react, and begin to switch off the power generation mechanism of the bacteria. As a consequence, the system evolves to (D) where the bacteria 104X-107X have become quiescent (or killed), and the absence of the acid in the biofilm slows down the hydration reaction and the ROS generation, as shown in D so that the consumption of the nano-active particle 101 slows down after having consumed an amount of the particle 108X in reacting with the acid and producing the ROS. The result of these reactions consumes the particle (not shown) through the release of Mg²⁺ ions into the solution to balance the charge from neutralisation and RO generation. In reality, the reactions generally occur throughout the porous particle. The end effect is that the nano-active powder has quenched the formation of biofilm in this example embodiment, so that disease is inhibited. It is stressed that the inhibition does not necessarily have to kill the bacteria as would a true toxic chemical bactericide, so that the bacteria and the eukaryotic cells (if present) can coexist.

It would be appreciated by a person skilled in the art that the interaction between the cells of animals and plants with various diseases from microorganisms and insects is very complex, and has evolved over time with a wide variety of responses including biofilms and extracellular matrices, including the involvement of ROS as described above. Thus, the example embodiment of Figure 1 is one example of how a nano-active particle may interact with a pathogen, including viruses, bacteria and fungi. It is appreciated by people skilled in the art that there is a hierarchy of complexity in the structures of such microorganisms that lead to a more complex picture than that described in Figure 1.

The general approach described in the particular embodiment applies to a wide variety of metal and semi-metal oxides, including AgO, ZnO, CuO, MgO, SiO₂, Al₂O₃, Mn₃O₄ and others. The particular precursors may be carbonates, hydroxides, amines, and hydrated oxides. The nano-active materials may be produced as strained oxides in a variety of ways from precursors, including flash calcination and quenching, and the paramagnetic defect centres may have different hydration rates, pH equilibria, and activation energies for formation of radical species by mechanisms similar to oxygen atom displacement described above.

In the case of MgO the strained nano-active MgO particles may be formed from magnesium carbonate by flash calcination and quenching, and the ROS is generated during the hydration reaction. It is been established that the residual MgO, or Mg(OH)₂ may play other roles in the process. For example, as an alkali, the particles change the local pH in such a way to minimise the formation of H₂S, a known toxin, from the decomposition of materials, such a proteins. Furthermore, the porous MgO is known to extract phosphorous through the formation of magnesium phosphates, and phosphorous and ammonia from the formation of struvite, MgNH₄PO₄.6H₂O. In the context of biofilms, these processes may occur after the ROS production from hydration of the MgO, and may promote a favourable ecosystem for the system. It is generally accepted that anaerobic and aerobic organisms and microorganisms survive together in such systems in a symbiotic relationship. Thus the linkage between particle size distribution, ROS generation, degree of hydration, solubility and particle consumption, alkalinity, H₂S inhibition, phosphate and struvite production are complex. In this context, the particles from an initially porous high surface area MgO accelerate reactions, and can act as nuclei to accelerate the formation of materials, such a struvite, that otherwise require seeding with struvite nuclei to induce precipitation, or precipitation occurs under abnormal conditions such as pressure gradients at bends which form struvite films in bends of pipes in reactors such as digesters.

Notwithstanding these complexities, it is observed that there is a substantial increase in efficacy of control on pathogens between formulations particles that had been minimally hydrated prior to inoculation, compared to particles that had been fully hydrated before inoculation, where all other variables are substantially the same. That impact in this invention, is attributed to the ability of a strained metal oxide particle to release a burst of ROS in the presence of active microorganisms at a higher ROS concentration that particles with stored ROS formed by prior hydration.

Further forms of the invention will be apparent from the description and drawings.

The present invention and the described preferred embodiments specifically include at least one feature that is industrially applicable.

## Claims

1. A metal or semi-metal oxide powder inhibiting the growth of colonies of microorganisms, wherein:
• the powder includes particles having a particle size distribution between 0.1 to 100 microns, which are formulated as a strongly bonded, porous, composite of nano-scale grains of materials, wherein the grains have a surface area of 75 to 300 m²/g and which have less than about 10⁻⁴ % of free radical species by weight;
• the powder includes less than 1% of the maximum amount of radical species by weight; and
• the powder is generated by hydration of an unprocessed metal or semi-metal oxide powder in 0.01M citric acid.

2. The powder of claim 1, wherein the particle size distribution is between 1 to 20 microns.

3. The powder of claim 1 or claim 2, wherein the microorganisms include a biofilm and wherein the acidity of the biofilm triggers the release of the reactive oxygen species (ROS) burst which then suppresses the growth of the microorganisms.

4. The powder of claim 1 or claim 2, which is adapted to be used in one of the following environments: a marine environment, a sewer crown environment, a plant, an animal, or a human.

5. The powder of claim 1 or claim 2, wherein the microorganisms are selected from one of the following group: viruses, bacteria, fungi or larvae of insects.

6. The powder of Claim 4, the oxide is selected from one of the following oxides: AgO, ZnO, CuO, MgO, SiO₂, Al₂O₃, Mn₃O₄; and wherein the respective positive ion is selected to provide nutrients to the selected environment.

7. The powder of claim 6, wherein the powder includes MgO and the powder inhibits the microorganism growth by the suppression of hydrogen sulphide, ammonia and phosphorous produced by the microorganisms.

8. The powder of claim 6, wherein the powder is generated by annealing the unprocessed metal or semi-metal oxide powder at a calcination temperature within the range of 400 to 800°C.

9. The powder of claim 6, wherein the powder includes the following characteristics:
a. A porosity of the particles is in the range of 0.3 to 0.5;
b. A specific surface area is in the range of 75 to 300 m²/g;
c. A mean grain size of the powder is in the range of 5-20 nm; and
d. A strength **characterised by** a high resistance to grinding attributed to the binding of grains in the composite by necks that are less than about 1nm in size, and a Youngs modulus of 5% of that of the equivalent bulk material.

10. The powder of claim 9, wherein the powder is adapted for use in a marine coating which inhibits microorganism growth on the coating.

11. The powder of claim 9, wherein the powder is a component of a coating applied to sewer crowns which inhibits the growth of Sulphur Oxidising Bacteria.

## Patentansprüche

1. Metall- oder Halbmetalloxid-Pulver, das das Wachstum von Kolonien von Mikroorganismen blockiert, wobei:
• Das Pulver Partikel mit einer Partikelgrößenverteilung zwischen 0,1 und 100 Mikrometern einschließt, die als festhaftende, poröse Verbundstruktur nanoskaliger Materialkörner formuliert sind, wobei die Körner eine Fläche von 75 bis 300 m²/g und weniger als etwa 10⁻⁴ Gew.-% von Spezies freier Radikale aufweisen;
• das Pulver weniger als 1 Gew.-% des Höchstbetrags an Spezies freier Radikale einschließt; und
• das Pulver durch Hydratation eines unverarbeiteten Metall- oder Halbmetalloxid-Pulvers in 0,01M Zitronensäure erzeugt wird.

2. Pulver nach Anspruch 1, wobei die Partikelgrößenverteilung zwischen 1 und 20 Mikrometern liegt.

3. Pulver nach Anspruch 1 oder Anspruch 2, wobei die Mikroorganismen einen Biofilm einschließen und wobei die Azidität des Biofilms die Freigabe eines reaktiven Sauerstoffspezies (ROS)-Burst auslöst, der dann das Wachstum der Mikroorganismen unterdrückt.

4. Pulver nach Anspruch 1 oder Anspruch 2, das so angepasst ist, dass es in einer der folgenden Umgebungen verwendet werden kann: Meeresumwelt, Kanalkronenumgebung, Pflanze, Tier oder Mensch.

5. Pulver nach Anspruch 1 oder Anspruch 2, wobei die Mikroorganismen ausgewählt sind aus einer der folgenden Gruppen: Viren, Bakterien, Pilzen oder Insektenlarven.

6. Pulver nach Anspruch 4, wobei das Oxid ausgewählt ist aus einem der folgenden Oxide: AgO, ZnO, CuO, MgO, SiO2, Al2O3, 304 und wobei das entsprechende positive Ion so ausgewählt ist, dass es der ausgewählten Umgebung Nährstoffe zuführen kann.

7. Pulver nach Anspruch 6, wobei das Pulver MgO einschließt und das Pulver das Wachstum der Mikroorganismen durch Unterdrücken von Schwefelwasserstoff, Ammoniak und Phosphor, die von den Mikroorganismen produziert werden, blockiert.

8. Pulver nach Anspruch 6, wobei das Pulver durch Härten des
unverarbeiteten Metall- oder Halbmetalloxid-Pulvers bei einer Kalzinierungstemperatur im Bereich von 400 bis 800 °C erzeugt wird.

9. Pulver nach Anspruch 6, wobei das Pulver die folgenden Eigenschaften einschließt:
a. Die Porosität der Partikel liegt im Bereich 0,3 bis 0,5;
b. Eine spezifische Oberfläche liegt im Bereich von 75 bis 300 rn²/g;
c. Eine mittlere Korngröße des Pulvers liegt im Bereich 5 - 20 nm; und
d. eine Stärke, die sich durch eine hohe Schleifbeständigkeit auszeichnet, die auf die Bindung der Körner in der Verbundstruktur durch Hälse mit einer Größe von weniger als etwa 1 nm und ein Young-Modul von 5 % desjenigen des äquivalenten Grundmaterials zurückzuführen ist.

10. Pulver nach Anspruch 9, wobei das Pulver für die Verwendung in einem Schiffslack angepasst ist, der das Wachstum von Mikroorganismen auf der Beschichtung blockiert.

11. Pulver nach Anspruch 9, wobei das Pulver eine Komponente der Beschichtung ist, die auf die Kanalkronen aufgetragen wird und die das Wachstum von schwefeloxidierenden Bakterien blockiert.

## Revendications

1. Poudre d'oxyde métallique ou semi-métallique, inhibant la croissance de micro-organismes, dans laquelle :
• la poudre inclut des particules ayant une distribution de tailles de particules comprise entre 0,1 et 100 micromètres, qui sont formulées sous forme d'un composite poreux, fortement lié, de grains nanométriques de matières, les grains ayant une surface spécifique de 75 à 300 m²/g et comportant moins de 10⁻⁴ % en poids d'espèces radicalaires libres ;
• la poudre inclut moins de 1 % en poids de la quantité maximale d'espèces radicalaires ; et
• la poudre est produite par hydratation dans de l'acide citrique 0,01 M d'une poudre d'oxyde métallique ou semi-métallique non traitée.

2. Poudre selon la revendication 1, dans laquelle la distribution de tailles de particules est comprise entre 1 et 20 micromètres.

3. Poudre selon la revendication 1 ou la revendication 2, dans laquelle les micro-organismes incluent un biofilm et dans laquelle l'acidité du biofilm déclenche la libération de la salve d"espèces oxygénées réactives (EOR) qui supprime alors la croissance des micro-organismes.

4. Poudre selon la revendication 1 ou la revendication 2, qui est adaptée à être utilisée dans l'un des environnements suivants : un environnement marin, un environnement de couronne d'égout, une plante, un animal, ou un humain.

5. Poudre selon la revendication 1 ou la revendication 2, dans laquelle les micro-organismes sont choisis dans l'un des groupes suivants : virus, bactéries, champignons ou larves d'insectes.

6. Poudre selon la revendication 4, dans laquelle l'oxyde est choisi parmi l'un des oxydes suivants : AgO, ZnO, CuO, MgO, SiO₂, Al₂O₃, Mn₃O₄, et dans laquelle l'ion positif respectif est choisi pour fournir des nutriments à l'environnement choisi.

7. Poudre selon la revendication 6, la poudre incluant MgO et la poudre inhibant la croissance de micro-organismes par la suppression de sulfure d'hydrogène, d'ammoniac et de phosphore produits par les micro-organismes.

8. Poudre selon la revendication 6, la poudre étant produite par recuit de la poudre métallique ou semi-métallique à une température de calcination dans la plage de 400 à 800 °C.

9. Poudre selon la revendication 6, la poudre comprenant les caractéristiques suivantes :
a. une porosité des particules est dans la plage de 0,3 à 0,5 ;
b. une surface spécifique est dans la plage de 75 à 300 m²/g ;
c. une taille moyenne de grain de la poudre est dans la plage de 5-20 nm ; et
d. une ténacité **caractérisée par** une grande résistance au broyage, attribuée à la liaison des grains dans le composite par des cols qui ont une taille inférieure à environ 1 nm, et un module d'Young de 5 % de celui de la matière équivalente en vrac.

10. Poudre selon la revendication 9, la poudre étant adaptée pour utilisation dans un revêtement marin qui inhibe la croissance de micro-organismes sur le revêtement.

11. Poudre selon la revendication 9, la poudre étant un composant d'un revêtement appliqué sur des couronnes d'égout, qui inhibe la croissance de bactéries oxydant le soufre.
